(19) Europäisches Patentamt / European Patent Office / Office européen des brevets

(11) **EP 4 586 145 A1**

(12) **EUROPEAN PATENT APPLICATION**

(43) Date of publication:
**16.07.2025 Bulletin 2025/29**

(21) Application number: **25150635.8**

(22) Date of filing: **08.01.2025**

(51) International Patent Classification (IPC):
*G06N 3/0464* (2023.01)  *G06N 3/048* (2023.01)
*G06N 3/063* (2023.01)

(52) Cooperative Patent Classification (CPC):
**G06N 3/0464; G06N 3/048; G06N 3/063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.01.2024 GB 202400306**

(71) Applicant: **Imagination Technologies Limited Kings Langley, Hertfordshire WD4 8LZ (GB)**

(72) Inventors:
• **BI, Jia**
  **Hertfordshire, WD4 8LZ (GB)**
• **DIKICI, Cagatay**
  **Hertfordshire, WD4 8LZ (GB)**

(74) Representative: **Elkington and Fife LLP Prospect House 8 Pembroke Road Sevenoaks, Kent TN13 1XR (GB)**

(54) **NEURAL NETWORK**

(57) A neural network block is provided. It has at least three layers: an expansion layer, a compression layer, and a grouped convolution layer. The expansion layer has more output channels than input channels. The compression layer has more input channels than output channels. A related neural network accelerator and method of inference are also provided.

**EP 4 586 145 A1**

| |
|---|
| Point-wise Conv 1x1 — 110 |
| Batched Group Normalisation — 140 |
| Activation Function (Hardswish) — 150 |
| Point-wise Conv 1x1 — 132 |
| Batched Group Normalisation — 144 |
| Group Conv KxK — 124 |
| Batched Group Normalisation — 146 |
| Activation Function (Hardswish) — 154 |

**FIGURE 5B**

## Description

This application claims priority from UK patent application 2400306.3 filed on 9 January 2024 hereby incorporated by reference in its entirety.

TECHNICAL FIELD

The present disclosure relates to machine learning - and in particular to machine learning models based on neural networks. Examples concern, in particular, the efficient implementation of neural networks on constrained devices, such as personal portable mobile devices (including smartphones, tablets, and the like).

BACKGROUND

MobileNets are neural network architectures that were developed to run on embedded / edge devices. They are designed to reduce computational burden without sacrificing performance (that is, accuracy of inference).

For example, in MobileNetV3, the "hard swish" activation function is used in place of the swish activation function. In the hard swish, the computationally expensive sigmoid function of the swish activation function is replaced with a piecewise linear approximation.

Another characteristic feature of MobileNets is the use of a so-called "inverted residual block" (also known as an "inverted linear bottleneck" or "MBConv" block). This is a series of layers that uses expansion, followed by filtering, followed by compression, to process an input tensor and produce an output tensor of the same size. The expansion layer involves a 1x1 convolution, which expands the input to a higher-dimensional space. Spatial filtering is then performed in this higher-dimensional space using a depth-wise convolution. The results are then projected from the higher-dimensional space (using another 1x1 convolution) to restore the original number of channels present in the input. There is also a "residual" connection directly between the input and the output layer.

The inverted residual block offers an efficient building block for constructing a neural network that is well suited to implementation on a mobile CPU. The use of depth-wise convolution, for example, reduces the number of parameters (weights) compared with a full, conventional convolution in the higher-dimensional space. Since its introduction in MobileNetV1, depth-wise convolution has become a popular tool in many neural network designs.

In the conventional MobileNet block, batch normalisation is applied after each of the three layers. Batch normalisation is conventionally applied to increase the speed of training. It involves calculating a running mean and running variance for each output channel over each mini-batch during the training phase, and then subtracting the mean and dividing by the variance. This tends to normalise the activations so that they have zero mean and unit variance throughout training. Subsequent layers then do not need to adapt to shifting numerical ranges at their inputs over the course of the training process.

During the inference phase, there is no need to calculate the mean and variance. Instead, the final values of the running mean and variance from the training phase are used to normalise the activations.

MobileNets have produced good results in many image processing tasks - including, for example, object detection and classification tasks.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect of the present disclosure, a neural network block is provided. It has at least three layers: an expansion layer, a compression layer, and a grouped convolution layer. The expansion layer has more output channels than input channels. The compression layer has more input channels than output channels. A related neural network accelerator and method of inference are also provided.

According to a second aspect of the present disclosure, a normalisation technique for a neural network layer is provided. The output data of the layer includes at least two groups of channels. During the inference phase, a first scaling value is applied to a first group of channels and a second scaling value is applied to a second group of channels. The scaling values may be calculated during a training phase. In particular, the first scaling value may be based on a standard deviation in the first group of channels during the training phase, and the second scaling value may be based on a standard deviation in the second group of channels during the training phase.

According to the first aspect, there is provided a neural network block comprising a plurality of layers, wherein the layers are arranged sequentially and include:

an expansion layer having a first number of input channels, and a second number of output channels, wherein the second number is larger than the first number;

a compression layer, having a third number of input channels, and a fourth number of output channels, wherein the fourth number is smaller than the third number; and

a grouped convolution layer.

This block is inspired by the inverted bottleneck " MBConv" blocks of MobileNet. The depth-wise convolution layer of the MobileNet block is replaced with the grouped convolution layer.

In general, the three recited layers may be instantiated in any order (unlike the MobileNet block). They are arranged sequentially in a feedforward fashion - meaning that the input to a third one of the layers is based on activations output from a second one of the layers, and the input to the second one of the layers is based on activations output from a first one of the layers.

It should be understood that the block may include additional layers in between the three layers summarised above. The additional layers may include a normalisation function or an activation function, for example.

The compression layer and the grouped convolution layer may be arranged after the expansion layer. The expansion layer may be arranged as the first layer of the neural network block.

An input to the grouped convolution layer may be based on an output of the expansion layer or based on an output of the compression layer. In MobileNet, the input to a depth-wise convolution layer is based on the output of an expansion layer. That is, the depth-wise convolution layer is the middle layer of the three, in the canonical MobileNet block.

The input to the grouped convolution layer may be based on an output of the compression layer.

The second number may be equal to the third number. That is, the compression layer may be configured to receive a number of input channels that is equal to the number of output channels of the expansion layer.

The fourth number may be equal to the first number. That is, the compression layer may be configured to produce a number of output channels that is equal to the number of input channels of the expansion layer. In this way, the compression layer restores the dimensionality of the data received by the expansion layer.

The neural network block may further comprise an activation function following any of: the expansion layer, the compression layer, and the grouped convolution layer. In some examples, the activation function may comprise a hard swish. The activation function may follow directly after the relevant layer; alternatively, it may follow indirectly - for example, there may be a normalisation function between the layer in question and the activation function.

The neural network block may further comprise a normalisation function following any of: the expansion layer, the compression layer, and the grouped convolution layer. The normalisation function may be performed immediately after any one of: the expansion layer, the compression layer, and the grouped convolution layer. That is, the output of one of these layers provides the input to the normalisation function. In some examples, a normalisation function may be performed immediately after each of the three layers mentioned. An output of the normalisation function may be provided as input to an activation function.

An input to the normalisation function may comprise one or more activation values in each of a plurality of channels, the plurality of channels including a first group of channels and a second group of channels, wherein the normalisation function is optionally configured to, in an inference phase: scale each activation value in the first group of channels by a first scaling value; and scale each activation value in the second group of channels by a second scaling value.

Optionally, the first scaling value may be set equal to a standard deviation of activation values in the first group of channels in a training phase; and the second scaling value may be set equal to a standard deviation of activation values in the second group of channels in a training phase.

The normalisation function may be further configured to, in the inference phase: add to each activation value in the first group of channels a first offset value; and add to each activation value in the second group of channels a second offset value.

An input to the normalisation function may comprise one or more activation values in each of a plurality of channels, the plurality of channels including a first group of channels and a second group of channels, wherein the normalisation function is optionally configured to, in an inference phase: add to each activation value in the first group of channels a first offset value; and add to each activation value in the second group of channels a second offset value.

Optionally, the first offset value may be set equal to the negative of a mean of activation values in the first group of channels in a training phase; and the second offset value may be set equal to the negative of a mean of activation values in the second group of channels in a training phase.

Each of the expansion layer, the compression layer, and the grouped convolution layer may be defined by a set of weights, wherein the weights for any one, any two, or all three of these layers are stored in a fixed point format. Each set of weights may be applied to input data of the respective layer. In particular, each layer may comprise a sum-of-products calculation, wherein the weights are multiplied by input data to the layer and the results of the multiplications are summed. In some examples, the fixed point format may be an 8-bit fixed point format.

A neural network may be formed comprising a plurality of neural network blocks as summarised above. The neural network block (or neural network) may be implemented by a neural network accelerator. Accordingly, there is provided a neural network accelerator configured to implement a neural network block as summarised above. The neural network accelerator may be configured to implement a neural network comprising a plurality of neural network blocks as summarised above. Also provided is a method of inference using a neural network, wherein the neural network includes a neural network block as summarised above.

Further provided according to the first aspect is a method of inference using a neural network including a block comprising a plurality of layers, wherein the layers are arranged sequentially in the block and include:

> an expansion layer having a first number of input channels, and a second number of output channels, wherein the second number is larger than the first number;
> a compression layer, having a third number of input channels, and a fourth number of output channels, wherein the fourth number is smaller than the third number; and
> a grouped convolution layer,
> the method comprising:

>> obtaining input data for a first layer of the plurality of layers;
>> obtaining weight data for the plurality of layers; and
>> evaluating the block, comprising evaluating each layer of the plurality of layers, wherein evaluating each layer comprises multiplying the input data by the weight data and summing results of said multiplying.

The method of may be performed by a neural network accelerator. The neural network accelerator may comprise a plurality of convolution engines each configured to perform a sum-of-products calculation. The expansion layer, the compression layer, and the grouped convolution layer may each be evaluated using the convolution engines. Each convolution engine may comprise a plurality of multiplication units, and a plurality of addition units arranged to sum the outputs of the multiplication units.

The input data to the neural network may comprise image or video data. In some examples, the image or video data is input to the neural network block.

The neural network may be used for detection and/or classification of visual content in the image or video data.

According to the second aspect, there is provided, a method of inference using a neural network, the method comprising:

> evaluating a layer of the neural network to produce one or more activation values in each of a plurality of channels, the plurality of channels including a first group of channels and a second group of channels; and
> normalising the activation values, comprising:

>> scaling each activation value in the first group of channels by a first scaling value; and

>> scaling each activation value in the second group of channels by a second scaling value.

Optionally, the first scaling value may be set equal to a standard deviation of activation values in the first group of channels in a training phase; and the second scaling value may be set equal to a standard deviation of activation values in the second group of channels in the training phase. Here, the scaling may comprise dividing the activation values by the relevant scaling value or multiplying the activation values by the reciprocal of the relevant scaling value.

The method may further comprise: adding to each activation value in the first group of channels a first offset value; and adding to each activation value in the second group of channels a second offset value. The offset values may be positive or negative. Here, the recited step of "adding" an offset value includes within its scope the possibility of *subtracting* the *negative* of the offset value.

Optionally, the first offset value may be set equal to the negative of a mean of activation values in the first group of channels in a training phase; and the second offset value may be set equal to the negative of a mean of activation values in the second group of channels in a training phase.

Also provided is a method of training a neural network comprising a layer to be normalised, the method comprising:

> obtaining a first batch of training data, the first batch of training data comprising one or more instances of input data for the neural network;
> for each instance of input data in the first batch of training data, evaluating the layer to be normalised based on the instance, to produce one or more activation values in each of a plurality of channels, the plurality of channels including a first group of channels and a second group of channels;
calculating a first standard deviation of the activation values in the first group of channels;
calculating a second standard deviation of the activation values in the second group of channels;
determining a first scaling value based on the first standard deviation;
determining a second scaling value based on the second standard deviation;
scaling each activation value in the first group of channels by the first standard deviation; and
scaling each activation value in the second group of channels by the second standard deviation.

Each standard deviation may be calculated over all activation values for all instances in the first batch (over the respective group of channels).

In some examples, the first scaling value may be set equal to the first standard deviation, or may be set equal to the reciprocal of the first standard deviation. Likewise, the second scaling value may be set equal to the second standard deviation, or may be set equal to the reciprocal of the second standard deviation. The scaling of the activation values may be configured to normalise them - for example, to divide them by a scaling value that is directly related (or equal) to the relevant standard deviation, or to multiply them by scaling value that is inversely related to the relevant standard deviation.

The method may further comprise: obtaining a second batch of training data, the second batch of training data comprising one or more further instances of input data for the neural network; for each instance of input data in the second batch of training data, evaluating the layer to be normalised based on the instance, to produce one or more activation values in each of the plurality of channels; calculating a new first standard deviation of the activation values in the first group of channels, over all instances in the second batch; calculating a new second standard deviation of the activation values in the second group of channels, over all instances in the second batch; updating the first scaling value based on the new first standard deviation; and updating the second scaling value based on new second standard deviation.

The method may further comprise scaling each activation value in the first group of channels by the new first standard deviation; and scaling each activation value in the second group of channels by the new second standard deviation.

Updating the first scaling value may comprise forming a weighted sum of (i) a first variance, being the square of the first standard deviation, and (ii) a new first variance, being the square of the new first standard deviation. Similarly, updating the second scaling value may comprise forming a weighted sum of a second variance and a new second variance.

The first variance and the new first variance may be weighted according to the formula:

First_scaling_value = factor * new_first_variance* n / (n - 1) + (1 - factor) * first_variance

Here "factor" determines the weighting, and takes a value greater than zero and less than one

The method may continue iteratively in this way, maintaining a running scaling value by weighted summation of a new standard deviation, calculated from the latest batch of training data, with an old scaling value, calculated from previous batches of training data. This may be done according to the formula:

First_scaling_value = factor * new_first_variance * n / (n - 1) + (1 - factor) * First_scaling_value

The same also applies for the second scaling value.

The method may further comprise: calculating a first mean of the activation values in the first group of channels; calculating a second mean of the activation values in the second group of channels; determining a first offset value based on the first mean; determining a second offset value based on the second mean; subtracting from each activation value in the first group of channels the first mean; and subtracting from each activation value in the second group of channels the second mean.

Each mean may be calculated over all activation values for all instances in the first batch (over the respective group of channels).

In some examples, the first offset value may be set equal to the first mean, or may be set equal to the negative of the first mean. Likewise, the second offset value may be set equal to the second mean, or may be set equal to the negative of the second mean. The subtraction of the offset from the activation values may be configured to normalise them - for example, to shift them (negatively) by an offset value that is directly related (or equal) to the relevant mean, or to shift them (positively) by an offset value that is related (or equal) to the negative of the relevant mean.

In some examples, calculating each mean may comprise calculating a channel mean for each channel, followed by calculating a mean of the channel means.

The method may further comprise: obtaining a second batch of training data, the second batch of training data comprising one or more further instances of input data for the neural network; for each instance of input data in the second batch of training data, evaluating the layer to be normalised based on the instance, to produce one or more activation values in each of the plurality of channels; calculating a new first mean of the activation values in the first group of channels, over all instances in the second batch; calculating a new second mean of the activation values in the second group of channels, over all instances in the second batch; updating the first offset value based on the new first mean; and updating the second offset value based on new second mean.

The method may further comprise subtracting from each activation value in the first group of channels the new first mean; and subtracting from each activation value in the second group of channels the new second mean.

Updating the first offset value may comprise forming a weighted sum of the first mean and the new first mean. Similarly, updating the second offset value may comprise forming a weighted sum of the second mean and the new second mean.

The first mean and the first new mean may be weighted by factors that sum to unity.

The method may continue iteratively in this way, maintaining a running mean by weighted summation of a new mean (calculated from the latest batch of training data), with an old mean, (calculated over previous batches of training data).

The method may further comprise storing a final value of the first scaling value and a final value of the second scaling value, and optionally a final value of the first offset value and a final value of the second offset value, for use during inference with the trained neural network.

The method may further comprise performing inference using the trained neural network, comprising: obtaining a further instance of input data; evaluating the layer to be normalised, based on the instance, to produce one or more activation values in each of the plurality of channels; scaling each activation value in the first group of channels by the final value of the first scaling value obtained during training; and scaling each activation value in the second group of channels by the final value of the second scaling value obtained during training.

The method may further comprise subtracting from each activation value in the first group of channels the final value of the first offset value obtained during training; and subtracting from each activation value in the second group of channels the final value of the second offset value obtained during training. The offsets may be subtracted before the scaling occurs.

The layer to be normalised may be defined by a set of weights, wherein the weights are optionally stored in a fixed point format. The layer to be normalised may comprise or consist of a sum-of-products calculation. Each set of weights may be applied to input data of the respective layer. In particular, each layer may comprise a sum-of-products calculation, wherein the weights are multiplied by input data to the layer and the results of the multiplications are summed.

In some examples, the fixed point format may be an 8-bit fixed point format.

The layer to be normalised may be evaluated using fixed point arithmetic.

In some examples, the outputs of several layers may be normalised, and each of these layers may be evaluated using fixed point arithmetic.

The method may be performed in whole or in part by a neural network accelerator.

The neural network accelerator may comprise a plurality of convolution engines each configured to perform a sum-of-products calculation. The expansion layer, the compression layer, and the grouped convolution layer may each be evaluated using the convolution engines. Each convolution engine may comprise a plurality of multiplication units, and a plurality of addition units arranged to sum the outputs of the multiplication units.

Input data to the neural network may comprise image or video data. The neural network may be used for detection and/or classification of visual content in the image or video data.

Further provided is a neural network accelerator configured to perform a method as summarised above. The neural network accelerator may be embodied in hardware on an integrated circuit.

Further provided is a method of manufacturing, using an integrated circuit manufacturing system, a neural network accelerator as summarised above.

Also provided is a method of manufacturing, using an integrated circuit manufacturing system, a neural network accelerator as summarised above, the method comprising:

processing, using a layout processing system, a computer readable description of the neural network accelerator so as to generate a circuit layout description of an integrated circuit embodying the neural network accelerator; and manufacturing, using an integrated circuit generation system, the neural network accelerator according to the circuit layout description.

Further provided is computer readable code configured to cause a method as summarised above to be performed when the code is run.

Also provided is a computer readable storage medium having encoded thereon the computer readable code summarised above. That is, the computer readable code may be stored on a computer readable storage medium - optionally a non-transitory computer readable storage medium.

Further provided is an integrated circuit definition dataset that, when processed in an integrated circuit manufacturing system, configures the integrated circuit manufacturing system to manufacture a neural network accelerator as summarised above.

Also provided is a computer readable storage medium (optionally non-transitory) having stored thereon a computer readable description of a neural network accelerator as summarised above that, when processed in an integrated circuit manufacturing system, causes the integrated circuit manufacturing system to manufacture an integrated circuit embodying the neural network accelerator.

Also provided is a computer readable storage medium (optionally non-transitory) having stored thereon a computer readable description of a neural network accelerator as summarised above which, when processed in an integrated circuit manufacturing system, causes the integrated circuit manufacturing system to:

process, using a layout processing system, the computer readable description of the neural network accelerator so as to generate a circuit layout description of an integrated circuit embodying the neural network accelerator; and

manufacture, using an integrated circuit generation system, the neural network accelerator according to the circuit layout description.

Further provided is an integrated circuit manufacturing system configured to manufacture a neural network accelerator as summarised above.

Also provided is an integrated circuit manufacturing system comprising: a computer readable storage medium (optionally non-transitory) having stored thereon a computer readable description of a neural network accelerator as summarised above; a layout processing system configured to process the computer readable description so as to generate a circuit layout description of an integrated circuit embodying the neural network accelerator; and an integrated circuit generation system configured to manufacture the neural network accelerator according to the circuit layout description.

The layout processing system may be configured to determine positional information for logical components of a circuit derived from the integrated circuit description so as to generate a circuit layout description of an integrated circuit embodying the neural network accelerator.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a neural network block according to a comparative example;

Figure 2 is a block diagram of a neural network accelerator comprising fixed-function hardware, according to an example of the present disclosure;

Figure 3 is a block diagram of a convolution engine as used in Figure 2;

Figure 4A shows a neural network block according to a first example of the present disclosure;

Figure 4B shows a neural network block according to a second example of the present disclosure;

Figure 5A shows a neural network block according to a modification of the first example;

Figure 5B shows a neural network block according to a modification of the second example;

Figure 6 is a flowchart illustrating a method of inference using a neural network, according to an example;

Figure 7A is a flowchart illustrating a method of training a neural network, according to an example;

Figure 7B is a flowchart illustrating a method of inference using a neural network trained according to the example of Figure 7A;

Figure 8 shows a neural network according to an example;

Figure 9 shows a computer system in which an NNA is implemented; and

Figure 10 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

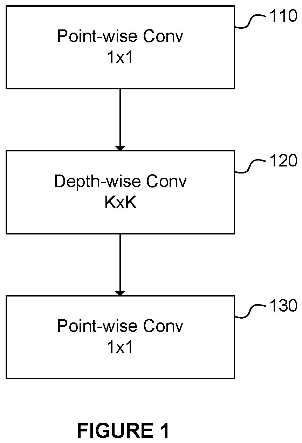

Figure 1 shows a block of neural network layers according to a comparative example. This block includes three layers, arranged sequentially. The first layer is an expansion layer 110, implemented in this example by a point-wise (1x1) convolution. The 1x1 convolution generates a number of output channels that is greater than the number of input channels to the expansion layer 110. In other words, the 1x1 convolution involves a number of filters that is greater than the number of input channels. The ratio of output channels to input channels is called the expansion ratio. The expansion ratio of the expansion layer is greater than one. In one example, the expansion layer 110 may be configured to receive input data having 80 channels, and to produce output data having 320 channels (thereby providing an expansion ratio equal to 4).

The input to the second layer is based on the output of the first layer. The second layer of the block in Figure 1 is a depth-wise convolution layer 120. In depth-wise convolution, each input channel of an input tensor is convolved with a respective channel of a weight tensor. This means that the number of output channels and the number of input channels are the same. Each channel is treated separately - that is, each output channel is influenced only by the content of the respective input channel (and the respective "slice" of weights). There is no crosstalk between channels. This enables a relatively large number of output channels to be produced with a relatively modest set of weights. Each output channel is produced using a set of k x k weights, which are applied to the respective input channel. This contrasts with a standard convolution, where each output channel may be influenced by any of the input channels, and there are k x k x C weights per output channel, where C is the number of input channels. An exemplary kernel size is k=7.

In one example, the depth-wise convolution layer 120 may be configured to receive input data having 320 channels and to produce output data having 320 channels. (The expansion ratio of a depth-wise convolution layer is always equal to one, as explained above.)

The input to the third layer is based on the output of the second layer. The third layer of the block in Figure 1 is a compression layer 130, implemented in this example by another point-wise 1x1 convolution. The 1x1 convolution generates a number of output channels that is smaller than the number of input channels to the compression layer 130. That is, the 1x1 convolution involves a number of filters that is smaller than the number of input channels, such that the expansion ratio of the compression layer 130 is less than one. In one example, the compression layer 130 is configured to receive input data having 320 channels and to produce output data having 80 channels.

The block of three layers in Figure 1 is representative of the feedforward connections in a MobileNet MBConv block.

The operations illustrated in Figure 1 may be implemented in the fixed-function hardware of a hardware accelerator (neural network accelerator).

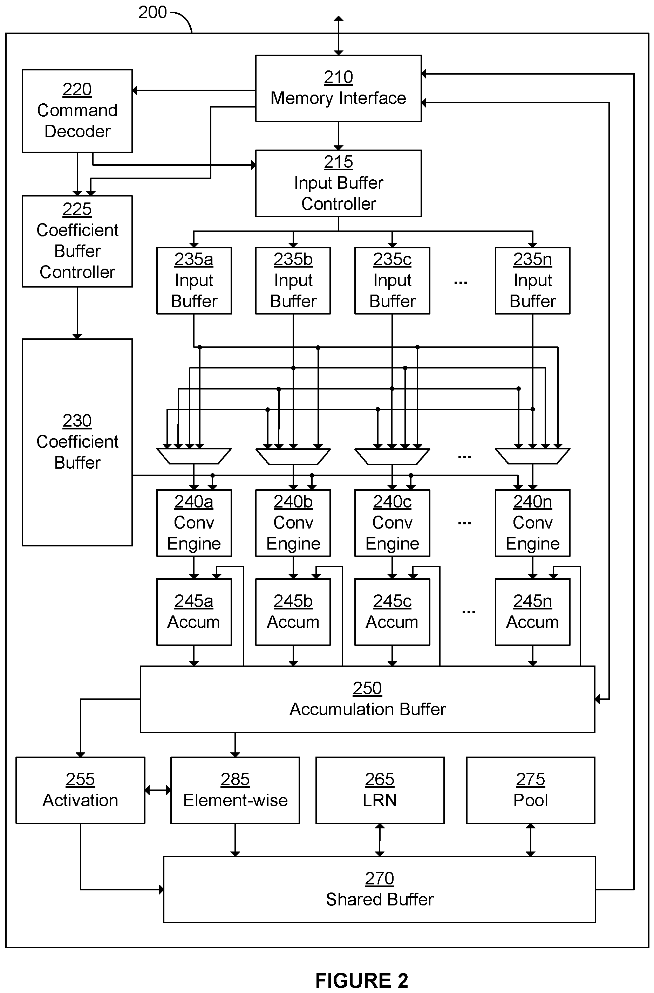

As shown in Figure 2, an exemplary hardware accelerator 200 (also referred to herein as a neural network accelerator or NNA) includes the following fixed-function hardware units:

- A set of convolution engines 240, specialised at convolution operations;
- An element-wise operations unit 285, specialised at performing the same operation to every pair of respective elements of two tensors of corresponding size;
- An activation unit 255, specialised at applying an activation function (which may be selectable, configurable, or fully programmable) to every element of a tensor;
- A local response normalisation (LRN) unit 265 (or normalisation unit, for short), specialised at performing neighbourhood-based normalisation operations; and
- A pooling unit 275, specialised at performing pooling operations, such as max-pooling and min-pooling.

In greater detail, the hardware accelerator 200 comprises digital logic circuitry that is configured to receive data (including weights and input tensors) and commands for processing them. The hardware accelerator 200 comprises a memory interface 210, an input buffer controller 215, a command decoder 220, a coefficient buffer controller 225, a coefficient buffer 230, n input buffers 235, n convolution engines 240, n accumulators 245, an accumulation buffer 250, an activation unit 255, a local response normalize (LRN) unit 265, a shared buffer 270, a pooling unit 275, and an element-wise operations unit 285.

The memory interface 210 is configured to provide an interface between the hardware accelerator 200 and an external memory (not shown in Figure 2). The external memory may be considered as a separate module to the hardware accelerator 200. It may store any or all of command or configuration information, weights, input data, and/or output data. The command or configuration information may comprise, for example, information regarding weight and data size and format as well as their location in the external memory.

The memory interface 210 is configured to receive, from external memory, weights and data to be used in calculations within the neural network, as well as command information to control the operation of the hardware accelerator 200. The received weights (also referred to herein as coefficients) are passed to the coefficient buffer controller 225 and the received data is passed to the input buffer controller 215. The received commands are passed to the command decoder 220, which, in turn, is configured to decode the commands and subsequently issue control information to elements of the hardware accelerator, including the coefficient buffer controller 225 and input buffer controller 215, to control the manner in which the weight and input data is stored in the buffers.

The weights and input data received from external memory via memory interface 210 during a read of the external memory may form the weights and input data for only a portion of a single layer, all of the weights and input data to be used in processing a single layer, or may comprise the weights and input data for processing multiple layers. For example, the weights received from external memory may form the weights of a single layer and the input data received may form only a portion of the input data for a single layer (or vice versa). Any combination of data and weights across one or more layers may be received from external memory in a single read from the memory (for example using a burst read).

In practice, the number of weights and data received in a single read from external memory will depend upon the size of the coefficient buffer 230 and the input buffer 235. The weights are passed from the coefficient buffer controller 225 to the coefficient buffer 230 and the data received is passed from the input buffer controller 215 to a plurality of input buffers 235a-235n. The number of input buffers will depend upon the specific implementation of the accelerator 200 but may take any value. The input data is shared across all of the input buffers 235a-235n. The input buffers each form an effective bank such that the number of input buffers can be increased or decreased depending on the application.

The input buffers 235a-235n are connected to each of a plurality of multiplexers, since each convolution engine 240a-240n requires access to all of the effective 'banks' of the input data. The multiplexers are each configured to select an output from one of the input buffers 235 and to pass the values output from the selected input buffer 235 to a respective convolution engine 240a-240n. In addition, weights from the coefficient buffer 230 are provided as a second input into each convolution engine 240a-240n. The convolution engines 240 are configured to perform a convolution calculation on the received input data using the weights received from the coefficient buffer 230. The resultant output of each convolution engine 240a-240n is provided as an input to a respective accumulator of a plurality of accumulators 245a-245n.

Each accumulator 245a-245n is connected to an accumulation buffer 250. The accumulation buffer 250 is configured to store accumulated results received from each accumulator 245a-245n. The accumulation buffer 250 is connected to the memory interface 210. As such, the accumulation buffer 250 is configured to send and receive data to and from external memory via memory interface 210. Specifically, the accumulation buffer 250 is configured to be able to store and restore its values from the external memory via memory interface 210, as will be described in more detail below. The accumulation buffer 250 is connected to the input of the accumulators 245a-245n and is configured to feed values back into the accumulators 245a-245n to enable accumulation calculations to take place.

The accumulation buffer 250 is configured to pass accumulated values to the activation unit 255 and/or the element-wise operations unit 285. The activation unit 255 is configured to perform at least one of a number of different activation functions.

The resultant value calculated by the activation unit 255 can be passed to be processed by the LRN unit 265 and/or the pooling unit 275 via the shared buffer 270. The LRN unit 265 is configured to perform a local response normalisation. This may be performed within a single plane of input data. Alternatively or in addition, the LRN operation may also be performed across planes.

A result stored in the shared buffer 270 is passed to the memory interface 210, which can either store the result in external memory or pass the result back into the input buffers for further processing without having to first be passed out to external memory.

The shared buffer 270 is configured to buffer values from any one or more of the activation unit 255, the LRN unit 265, the pooling unit 275, and the element-wise operations unit 285 until all the values required to perform the next operation are available. In this way, the shared buffer 270 is used for efficiency of storage as it can hold values required in later operations without having to use external memory.

The element-wise operations unit 285 comprises circuitry configured to perform element-wise operations on tensors received from the accumulation buffer 250 and/or activation unit 255. The supported element-wise operations may include element-wise addition, subtraction, multiplication, division, and maximum (or minimum) of the respective elements of the tensors.

Element-wise operations are operations that are repeated for multiple elements of at least one tensor. The operations are typically repeated for all elements of the tensor. Two categories of element-wise operation may be considered: unary operations, having a single operand, and binary operations, having two operands. The element-wise operations unit 285 handles binary element-wise operations. Element-wise operations may also be performed by other components of the hardware accelerator. For example, the activation unit 255 may perform unary element-wise operations, by applying a function to every element of a tensor.

Whilst the hardware accelerator of Figure 2 illustrates a particular order in which the units are arranged and thus how the processing of data flows through the hardware implementation, it will be appreciated that the specific calculations required and the order in which data is processed across layers may vary.

In some examples of evaluating neural network layers, the functions performed by the activation 255, LRN 265, pooling 275, and element-wise 285 units may all be performed. In other examples, only some of these functions may be performed and not necessarily in the order set out in the hardware accelerator 200. To achieve a configurable order of processing these functions, each of the activation 255, LRN 265, pooling 275 and element-wise 285 units may be configured to receive control signalling configuring the unit into a bypass mode in which the function is not performed and the input values are simply passed through the unit without change.

In some examples, the data of a particular layer may need to be processed first by the convolution engines 240a-n and then second according to the activation, LRN, pooling, and element-wise units 255, 265, 275, 285. In these examples, the outputs from the convolution engines 240a-n are passed via the accumulators 245a-n to the accumulation buffer 250 and are then passed to activation, LRN, pooling, and element-wise units 255, 265, 275, 285 for further processing. In other examples, the data may need to be processed differently. For example, data may need to be processed first according to the activation, LRN, pooling, and element-wise units 255, 265, 275, 285 and second according to the convolution engines 240a-n.

In these arrangements, data can be passed directly to the activation unit 255 via the accumulation buffer 250, where the accumulation buffer 250 has received the input data directly from the memory interface 210 which has received the data from external memory. In this way, the processing performed by convolution engines 240a-n and accumulator 245a-n is effectively skipped and the data can be passed directly to the activation 255, LRN 265, pooling 275, and element-wise 285 units. Then, once processing using activation, LRN, pooling, and element-wise units 255, 265, 275, 285 is completed, the resultant values can be passed into the input buffer controller 215 via the memory interface 210. In some arrangements, the resultant values can be first passed to external memory via memory interface 210 and then retrieved from external memory before use.

In other arrangements, the memory interface 210 may pass the resultant values to the input buffer controller 215 without passing the values to external memory. By avoiding the need to pass the values resulting from calculations using the activation, LRN, pooling, and element-wise unit 255, 265, 275, 285 to external memory, memory bandwidth is reduced and therefore the latency in processing the data is also reduced.

Advantageously, since the activation, LRN, pooling, and element-wise units 255, 265, 275, 285 are placed linearly, it is possible to perform these operations sequentially without having to retrieve data from external memory. In some implementations, the order in which the activation, LRN, pooling, and element-wise units 255, 265, 275, 285 are connected may vary. For example, the activation, LRN, and pooling units 255, 265, 275 may be connected in reverse order such that the pooling unit is connected to the accumulation buffer 250 and the activation unit is connected to the memory interface 210.

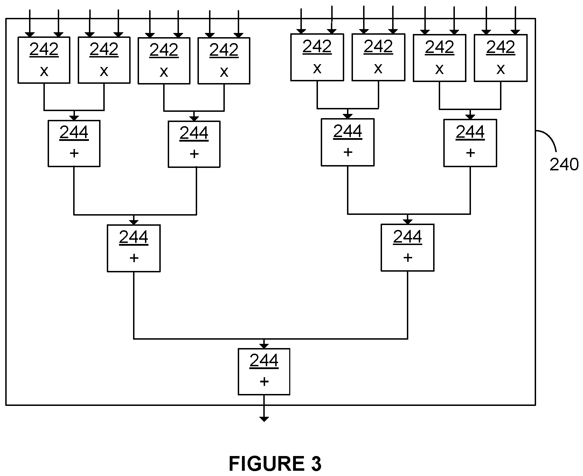

Figure 3 illustrates the structure of each of the convolution engines 240 in Figure 2. The convolution engine 240 comprises a plurality of elements of multiply logic 242, each configured to multiply a weight by an input data element, and a plurality of elements of addition logic 244, configured in a tree structure to sum the outputs of the elements of multiply logic 242.

Neural network blocks of the type exemplified by Figure 1 may offer good performance when implemented on a central processing unit (CPU) or graphics processing unit (GPU). However, the inventors have recognised that, when the block of layers of Figure 1 is evaluated using the exemplary neural network accelerator of Figure 2, the resulting implementation is relatively inefficient (compared with the accuracy it achieves on a canonical image classification task). Examples according to the present disclosure can increase the computational efficiency and/or increase the classification accuracy, compared with the comparative example of Figure 1 - in particular, when implemented on an NNA.

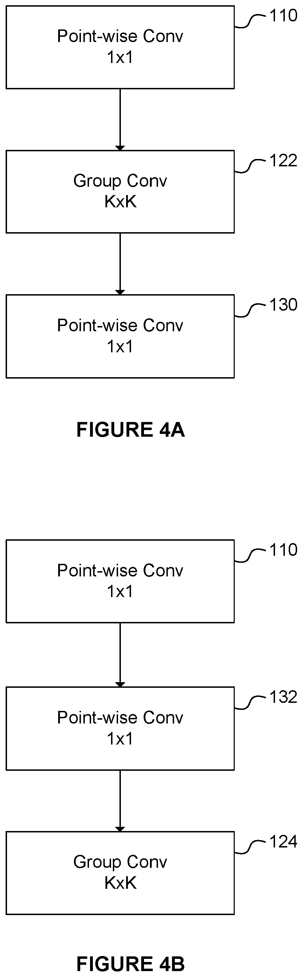

Figure 4A shows a neural network block according to a first example. In this example, the depth-wise convolution layer 120 of Figure 1 is replaced by a grouped convolution layer 122. In the depth-wise convolution layer 120 each filter processes a single input channel separately, using a respective k x k kernel of weights. Meanwhile, in a grouped convolution layer 122 each filter processes a group of channels together. For example, each filter may process a group of 16 channels together (to produce one output channel). The kernels involved in producing one output channel are now of dimension k x k x 16 weights. At first glance, it might appear that this would lead to a 16-fold increase in the number of computations to be performed. However, the exemplary NNA architecture is optimised to process data in sets of channels (for example, 16 channels). Consequently, depth-wise convolutions are implemented by padding each individual slice of k x k weights with zeros to form a k x k x 16 kernel. Accordingly, depth-wise convolution over 16 channels is actually equivalent to 16 separate convolutions, each with a kernel of dimensions $k \times k$ x 16. In this context, the inventors have recognised that the switch from depth-wise convolution layer 120 to grouped convolution layer 122 essentially comes without any computational cost. Of course, it requires training kernels of dimensions $k \times k$ x 16, instead of $k \times k$ x 1.

Examining the Top-1 classification accuracy on the ImageNet database, the inventors have found that using the block structure of Figure 4A achieves an improvement in classification accuracy of approximately 1% (from 77.3% to 78.2%), compared with the block structure in Figure 1, when both blocks are implemented on the exemplary NNA. The number of calculations and inference latency are essentially unchanged.

Figure 4B shows a neural network block according to a second example. In this example, in addition to replacing the depth-wise convolution 120 with a grouped convolution, the order of the layers is modified. The first layer is still the same expansion layer 110 - a point-wise 1x1 convolution (for example, with 80 input channels and 320 output channels). The second layer is a compression layer 132, implemented in this example by a point-wise 1x1 convolution. In this particular example, the compression layer 132 compresses the number of channels back down to the original number of input channels to the expansion layer 110. In this way, the number of input channels to the expansion layer 110 may be the same as the number of output channels of the compression layer 132. Thus, for example, the compression layer 132 may be configured to compress from 320 input channels down to 80 output channels. However, this is not essential. In general, the number of output channels from the compression layer 132 may be greater than or less than the number of input channels to the expansion layer 110.

The third layer is a grouped convolution layer 124. This is similar to the grouped convolution layer 122 of Figure 4A. (Its filters operate on groups of 16 input channels, for instance.) However, because the grouped convolution layer 124 is arranged after the compression layer 132, the number of input channels to the grouped convolution layer 124 is less the number of input channels to the grouped convolution layer 122 of Figure 4A.

Examining the Top-1 classification accuracy on the ImageNet database, the inventors have found that using the block structure of Figure 4B achieves an improvement in classification accuracy of approximately 9%, compared with the block structure in Figure 1, when both blocks are implemented on the exemplary NNA. At the same time, the number of calculations (measured in multiply-accumulate operations) can be reduced by around 40%. Correspondingly, the inference latency can be reduced by around 40%.

It should be understood that the illustrations in Figures 4A and 4B are not intended to exclude the possibility of other layers/functions in between the three layers illustrated. In particular, there may be activation functions and/or normalisation functions between the expansion layer, compression layer, and grouped convolution layer. In some examples, an activation function may be implemented at the output of each of the three layers mentioned. The activation function may comprise or consist of a hard swish, for example. Likewise, a normalisation function may be implemented at the output of each of the three layers. An output of the normalisation function may provide an input to the activation function.

In general, the normalisation function may be of any suitable type. Batch normalisation is one widely used normalisation function. To implement batch normalisation, in the training phase of the neural network, the mean and variance of the activations are calculated (per channel) for each batch of training data. That is, for each channel c, the following values are computed for each batch:

$$\mu_c = \frac{1}{N \times H \times W} \sum_{n}^{N} \sum_{h}^{H} \sum_{w}^{W} f_{n,c,h,w}$$

$$\gamma_c^2 = \frac{1}{N \times H \times W} \sum_{n}^{N} \sum_{h}^{H} \sum_{w}^{W} (f_{n,c,h,w} - \mu_c)^2$$

Here, N is the number of training data instances in the batch, and H and W are the height and width of each training data instance, respectively.

Over successive training batches, a running mean and running variance may be maintained for each channel. These running averages may be calculated as a weighted sum of the mean (and respectively, variance) for the current batch and the previous running average for the mean (and respectively, variance). In this way, the normalisation retains some "memory" of previous batches of training data, while also adapting to the newest batch.

During training, the activation values are normalised using the running mean and running variance. That is, the running mean is subtracted from the activation values, and the resulting shifted activation values are divided by the running standard deviation (which is the square root of the running variance).

At the end of the training phase, the final values of the running mean and running variance are stored for use during inference. During inference, there is no calculation of means and variances. Instead, the output of each layer is normalised using the final values of the relevant running means and running variances from the training phase. For greater computational efficiency, this normalisation may be absorbed into other calculations / functions (for example, the relevant convolution layer or activation function).

The inventors have found that improved results can be achieved by changing the normalisation method. In an example according to the present disclosure, a method denoted "batched group normalisation" is proposed. In addition to calculating the mean and variance (or standard deviation) over activations in each channel, over training batches, the present method accumulates statistics across channels within groups of channels. The mean statistic can be defined as follows:

$$\mu_g = \frac{1}{M} \sum_{c=(g-1)M+1}^{g.M} \mu_c$$

Here, g indexes the groups. M is the number of channels in each group. The corresponding variance statistic can be defined as follows:

$$\gamma_g^2 = \frac{1}{M \times N \times H \times W} \sum_{c=(g-1)M+1}^{g.M} \sum_{n}^{N} \sum_{h}^{H} \sum_{w}^{W} (f_{n,c,h,w} - \mu_g)^2$$

As with batch normalisation, the statistics used for batched group normalisation can be updated from batch to batch during training using a weighted average. The means are updated as follows:

$$running\ mean = factor\ \times \mu_g + (1 - factor) \times running\ mean$$

Here, "factor" is a weighting between 0 and 1 that determines the preference of the method for the most recent batch relative to the historical mean. To provide an unbiased estimator, the update-formula for the variance statistic is as follows:

$$running\ var = \frac{n \times factor\ \times \gamma_g^2}{n - 1} + (1 - factor) \times running\ var$$

Here, n is the number of training data instances in the current batch. During the inference phase, there is no need to calculate the statistics. Instead, the normalisation is performed using the final running mean and final running variance statistics calculated during training. In other words, the final running mean statistic is subtracted from the respective activations at the output of each layer, and the results are divided by the square root of the final running variance statistic.

Improved classification accuracy (in the inference phase) was observed when using this normalisation method, compared with conventional batch normalisation. In particular, it appears that the batched group normalisation method complements the use of grouped convolution. The proposed normalisation was found to be particularly beneficial in the context of a fixed point implementation. For instance, using an 8-bit fixed point format, it was found that a combination of grouped convolution and batched group normalisation increased the Top-1 classification accuracy by 80% compared with depth-wise convolution using batch normalisation. The increase in accuracy compared with grouped convolution using batch normalisation was 4%.

Without wishing to be bound by theory, it is believed that the batched group normalisation method is particularly advantageous for fixed point implementations because it helps to avoid disequilibrated weight ranges in different channels. When using batch normalisation, distributions of weights may vary strongly between channels. For example, the weights may span a range [-0.5, 0.5] in a first channel, and [-128, 128] in a second channel. When quantisation is applied, in order to represent the range of weights in the second channel, the weights in the first channel may all be quantised to 0. This has a detrimental impact on classification accuracy when performing inference using a fixed point numerical format. In contrast, when using batched group normalisation, it has been found that the variations between weight ranges in different channels are less pronounced. This helps to avoid the situation where the quantisation destroys information that is useful for the classification task.

The use of batched group normalisation was found to have little or no effect on the inference latency, on average. In other words, the use of batched group normalisation is not associated with any penalty in terms of speed of computation.

The neural networks that produced the test results mentioned above were designed using a "once for all" (OFA) neural architecture search (NAS) strategy. In each case, the network was constrained to use blocks of the desired type (that is, neural network blocks of the kinds illustrated in either Figure 1, Figure 4A, or Figure 4B). The network was constructed of five units, with each unit containing a sub-network made up of a number of blocks. Each unit was optimised separately by the search strategy. The search space of the OFA search was configured as follows: a choice of kernel sizes of 3, 5, or 7 was permitted; each network unit was permitted to have a depth of either 3 or 4 successive neural network blocks; and expansion ratios were permitted to be equal to 2 or 3. The inventors have recognised that deeper networks with smaller expansion ratios tend to work better (e.g., run faster and/or with greater classification accuracy) on the exemplary NNA architecture than shallower networks with larger expansion ratios. The search space was designed with this in mind. Larger expansion ratios increase the number of depth-wise convolutions. Increasing the depth in blocks means that the number of layers is larger. The OFA-based search was found to produce effective optimisation results. However, other NAS strategies are available and could be used in place of OFA.

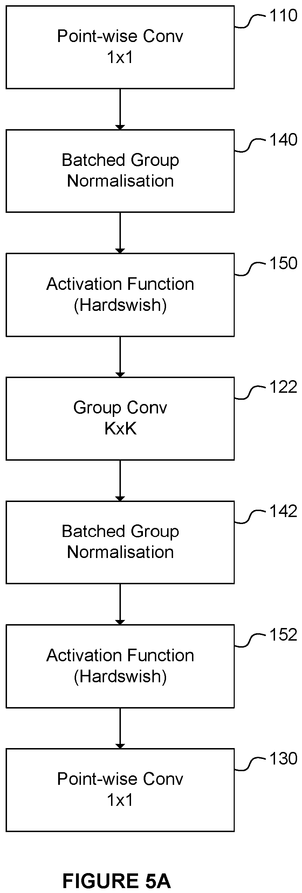

Figure 5A shows a modification of the neural network block illustrated in Figure 4A, incorporating normalisation operations and activation functions. The output of the expansion layer 110 is normalised by batched group normalisation 140. The normalised output is provided as input to an activation function 150. In this example, the activation function comprises a hard swish. The output of the activation function 150 is provided as input to the grouped convolution 122. The output of the grouped convolution 122 is normalised by a second batched group normalisation 142. The normalised output is then provided as input to a second activation function 152 (again, a hard swish, in this example). The output of the activation function 152 forms the input to the compression layer 130.

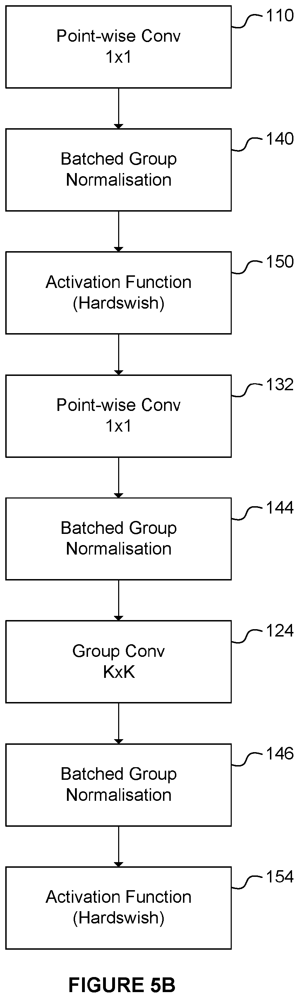

Similarly, Figure 5B shows a modification of the neural network block illustrated in Figure 4B, comprising normalisation and activation functions. Once again, the output of the expansion layer 110 is normalised by batched group normalisation 140. The normalised output is again provided as input to an activation function 150. The output of the activation function 150 is provided as input to the compression layer numeral 132. The output of the compression layer 132 is normalised by batched group normalisation 144. The normalised output is then provided as input to the grouped convolution 124. The output of the grouped convolution 124 is normalised by batched group normalisation 146. Finally, the normalised output is provided as input to an activation function 154.

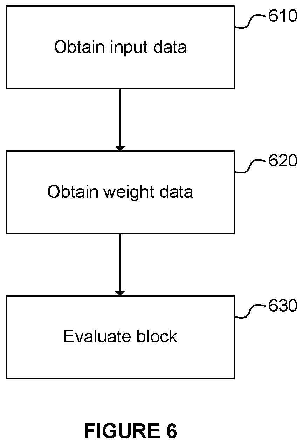

Figure 6 is a flowchart illustrating a method of inference using a neural network that includes a block such as those illustrated in Figures 4A to 5B. The inference method may be performed by the neural network accelerator 200 of Figure 2. In step 610, the NNA obtains input data for the first layer of the block. In step 620, the NNA obtains weight data for each of the layers in the block. In step 630, the NNA evaluates the block by evaluating each layer in turn. As explained already above, the expansion, compression, and grouped convolution layers involve convolution operations. These are evaluated using the convolution engines 240a-n of the NNA.

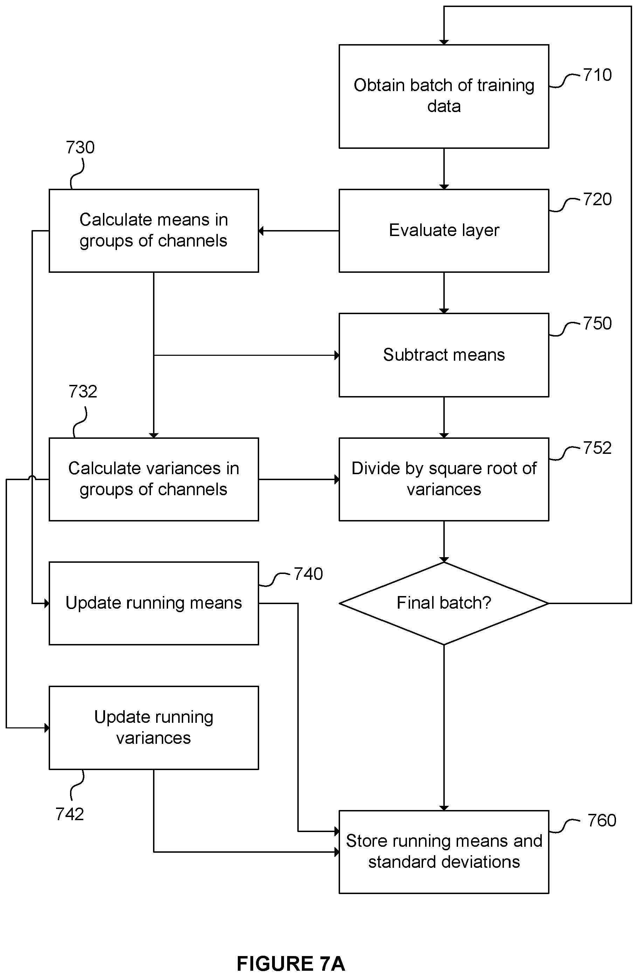

Figure 7A is a flowchart illustrating a method of training a neural network. The neural network includes at least one layer that is to be normalised using batched group normalisation. In some cases, the neural network may include a block such as one of those illustrated in Figures 4A-5B, but this is not essential - in principle, the output of any layer may be usefully normalised in this way. The method of Figure 7A be performed by one or more NNAs, such as the NNA 200 of Figure 2. Alternatively, it may be performed by one or more processors of some type - for example, a CPU or GPU. The following description will assume that the method is performed using an NNA, but it should be understood that this is not limiting.

In step 710, the NNA obtains a batch of training data. It uses this to train the neural network - for example, using a backpropagation method. During training on this batch, the NNA evaluates the layer to be normalised for each instance of training data in the batch (see step 720). This produces a tensor of activations at the output of the layer in question, for each instance of training data in the batch. In step 730, the NNA calculates the mean of the activation values over at least two groups of channels, over all instances of training data in the batch. In the present example, the group size is 16. That is, the mean is calculated over groups of 16 channels. (For the avoidance of doubt, the groups are nonoverlapping.) In step 732, the NNA calculates the variance of the activation values over the same groups of channels (again, for all instances of training data in the batch). Assuming, for the sake of simplicity, that there are just two groups of channels, step 730 will produce two mean values - one for the first group of channels and one for the second group of channels. Similarly, step 732 will produce two variance values - one each for the first and second groups of channels.

In step 740, the running means over batches are updated based on the mean values calculated in step 730. This is done using the weighted sum formula discussed previously above. To begin with, the running means are initialised to 0. Consequently, in the first iteration (for the first training batch) the update step 740 will simply return the mean values calculated in step 730. In subsequent iterations (for subsequent training batches), the update step 740 will blend the newly calculated means from step 730 with the old running means calculated in the previous iteration of step 740.

In step 742, the running variances are updated in a similar manner, using the relevant weighted sum formula defined previously above. To begin with, the running variances are initialised to 1. In a similar manner to step 740, each iteration of step 742 will blend the newly calculated variances from step 732 with the old running variances calculated in the previous iteration of step 742.

In step 750, the means calculated for the current batch are subtracted from the corresponding activation values produced in step 720. In step 752, the results of step 750 are scaled by dividing them by the standard deviations calculated for the current batch (where the standard deviations are defined as the square root of the variances). The normalised activations produced in step 752 are used to evaluate subsequent layers of the neural network (while training on the current batch).

If the current batch is not the final batch, then a further iteration is performed, with the method returning to step 710 to obtain a (further) batch of training data and train the neural network with that further batch.

When training using the final batch has been completed, the method proceeds to step 760. In step 760, the NNA stores the final values of the running means and running standard deviations, so that they can be used during inference.

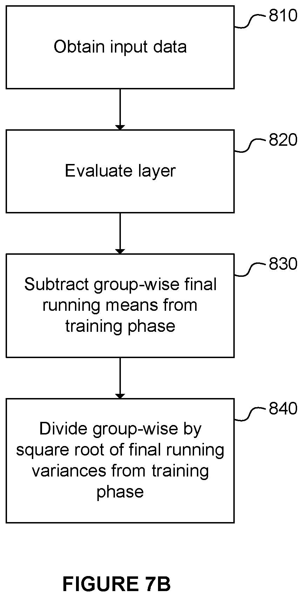

Figure 7B is a flowchart illustrating the ensuing inference method. In step 810, the NNA obtains at least one instance of input data. The NNA evaluates the neural network for this instance of input data, including evaluating (in step 820) the layer to be normalised using batched group normalisation. The NNA already stores the final running means and final running standard deviations. In step 830, it subtracts the final running means (derived in the training phase) from the activation values produced in step 820. Next, in step 840 the NNA scales the activation values output from step 830, dividing them by the final running standard deviations (derived in the training phase). This produces the desired normalised activation values, which are then processed through the remaining layers (if any) of the neural network.

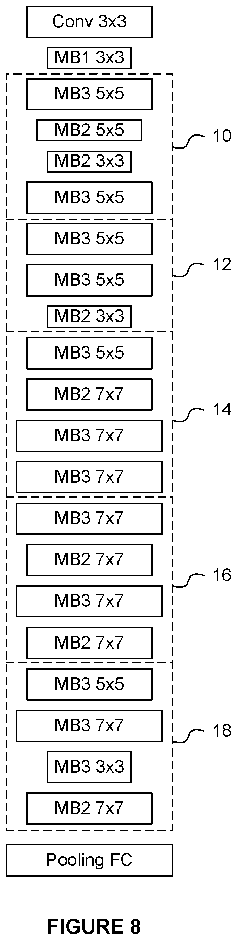

Figure 8 shows an example of a neural network based on the block shown in Figure 5B (including grouped convolution and batched group normalisation). Each block MBx in this drawing denotes one such block. The number x denotes the expansion ratio used by the expansion layer within the block. The appended numbers K x K indicate the kernel size of the grouped convolution layer. For example, "MB3 5x5" denotes a block with an expansion ratio of 3 and a 5x5 kernel. In the present implementation, the input is an image of size 224 x 224 pixels. The first layer of the network is a 3x3 convolution. This is followed by a block MB1 3x3. This is followed, in turn, by five units 10-18, shown in dashed outline, whose structure is determined using the OFA search, as discussed previously above. Each of the units 10, 12, 14, 16, 18 contains 3 or 4 blocks MBx, as determined by the search. The network ends with one or more pooling / fully-connected layers. It should be understood that each block MBx could alternatively be implemented using one of the other block structures disclosed earlier above (for example, those of Fig. 4A, 4B, or 5A).

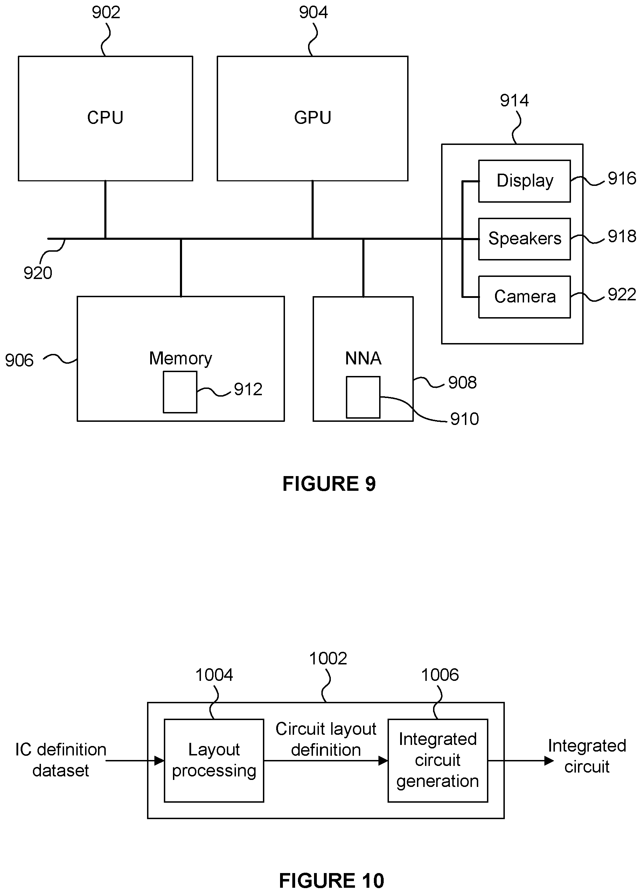

Figure 9 shows a computer system in which the neural network systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to the blocks shown in Figures 4A to 5B) is implemented on the NNA 908. In other examples, one or more of the depicted components may be omitted from the system, and/or the processing block 910 may be implemented on the CPU 902 or within the GPU 904. The components of the computer system can communicate with each other via a communications bus 920. A store 912 (corresponding to the external memory referenced in connection with Figure 2) is implemented as part of the memory 906.

The NNA of Figures 2-3 is shown as comprising a number of functional blocks. This is schematic only and is not intended to define a strict division between different logic elements of such entities. Each functional block may be provided in any suitable manner. It is to be understood that intermediate values described herein as being formed by an NNA need not be physically generated by the NNA at any point and may merely represent logical values which conveniently describe the processing performed by the NNA between its input and output.

The NNAs described herein may be embodied in hardware on an integrated circuit. The NNAs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture an NNA configured to perform any of the methods described herein, or to manufacture an NNA comprising any apparatus described herein. An integrated circuit definition dataset may be, for example, an integrated circuit description.

Therefore, there may be provided a method of manufacturing, at an integrated circuit manufacturing system, an NNA as described herein. Furthermore, there may be provided an integrated circuit definition dataset that, when processed in an integrated circuit manufacturing system, causes the method of manufacturing an NNA to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture an NNA will now be described with respect to Figure 10.

Figure 10 shows an example of an integrated circuit (IC) manufacturing system 1002 which is configured to manufacture an NNA as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining an NNA as described in any of the examples herein), process the IC definition dataset, and generate an IC according to the IC definition dataset (e.g. which embodies an NNA as described in any of the examples herein). The processing of the IC definition dataset configures the IC manufacturing system 1002 to manufacture an integrated circuit embodying an NNA as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an NNA without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A neural network block comprising a plurality of layers, wherein the layers are arranged sequentially and include:

   an expansion layer (110) having a first number of input channels, and a second number of output channels, wherein the second number is larger than the first number;
   a compression layer (130, 132), having a third number of input channels, and a fourth number of output channels, wherein the fourth number is smaller than the third number; and
   a grouped convolution layer (122,124).

2. The neural network block of claim 1, wherein the compression layer (130, 132) and the grouped convolution layer (122, 124) are arranged after the expansion layer (110).

3. The neural network block of claim 1 or claim 2, wherein an input to the grouped convolution layer (122, 124) is based on an output of the expansion layer (110) or based on an output of the compression layer (132).

4. The neural network block of claim 3, wherein the input to the grouped convolution layer (124) is based on an output of the compression layer (132).

5. The neural network block of any one of the preceding claims, wherein the second number is equal to the third number and/or the fourth number is equal to the first number.

6. The neural network block of any one of the preceding claims, further comprising an activation function (150, 152, 154) following any of: the expansion layer (110), the compression layer (130, 132), and the grouped convolution layer (122, 124).

7. The neural network block of any one of the preceding claims, further comprising a normalisation function (140, 142, 144, 146) following any of: the expansion layer (110), the compression layer (130, 132), and the grouped convolution layer (122, 124).

8. The neural network block of claim 7 wherein an input to the normalisation function (140, 142, 144, 146) comprises one or more activation values in each of a plurality of channels, the plurality of channels including a first group of channels and a second group of channels,
wherein the normalisation function is configured to, in an inference phase:

> scale each activation value in the first group of channels by a first scaling value; and
> scale each activation value in the second group of channels by a second scaling value.

9. The neural network block of claim 8, wherein:

> the first scaling value is set equal to a standard deviation of activation values in the first group of channels in a training phase; and
> the second scaling value is set equal to a standard deviation of activation values in the second group of channels in a training phase.

10. The neural network block of claim 8 or claim 9, wherein the normalisation function (140, 142, 144, 146) is further configured to, in the inference phase:

> add to each activation value in the first group of channels a first offset value; and
> add to each activation value in the second group of channels a second offset value.

11. The neural network block of claim 7, wherein an input to the normalisation function (140, 142, 144, 146) comprises one or more activation values in each of a plurality of channels, the plurality of channels including a first group of channels and a second group of channels,
wherein the normalisation function is configured to, in an inference phase:

> add to each activation value in the first group of channels a first offset value; and
> add to each activation value in the second group of channels a second offset value.

12. A method of inference using a neural network including a block comprising a plurality of layers, wherein the layers are arranged sequentially in the block and include:

> an expansion layer (110) having a first number of input channels, and a second number of output channels, wherein the second number is larger than the first number;
> a compression layer (130, 132), having a third number of input channels, and a fourth number of output channels, wherein the fourth number is smaller than the third number; and
> a grouped convolution layer (122, 124),
> the method comprising:
>
>> obtaining (610) input data for a first layer of the plurality of layers;
>> obtaining (620) weight data for the plurality of layers; and
>> evaluating (630) the block, comprising evaluating each layer of the plurality of layers, wherein evaluating each layer comprises multiplying the input data by the weight data and summing results of said multiplying.

13. The method of claim 12, wherein input data to the neural network comprises image or video data and/or wherein the neural network is used for detection and/or classification of visual content in the image or video data.

**14.** A neural network accelerator configured to perform the method of any of claims 12 to 13.

**15.** Computer readable code configured to cause the method of any of claims 12 to 13 to be performed when the code is run.

```
┌─────────────────────────┐
│     Point-wise Conv     │  ⌒ 110
│           1x1           │
└─────────────────────────┘
              │
              ▼
┌─────────────────────────┐
│     Depth-wise Conv     │  ⌒ 120
│           KxK           │
└─────────────────────────┘
              │
              ▼
┌─────────────────────────┐
│     Point-wise Conv     │  ⌒ 130
│           1x1           │
└─────────────────────────┘
```

**FIGURE 1**

**FIGURE 2**

**FIGURE 3**

```
┌─────────────────────────────┐
│                             │⌒ 110
│      Point-wise Conv        │
│           1x1               │
│                             │
└─────────────────────────────┘
              │
              ▼
┌─────────────────────────────┐
│                             │⌒ 122
│        Group Conv           │
│           KxK               │
│                             │
└─────────────────────────────┘
              │
              ▼
┌─────────────────────────────┐
│                             │⌒ 130
│      Point-wise Conv        │
│           1x1               │
│                             │
└─────────────────────────────┘
```

## FIGURE 4A

```
┌─────────────────────────────┐
│                             │⌒ 110
│      Point-wise Conv        │
│           1x1               │
│                             │
└─────────────────────────────┘
              │
              ▼
┌─────────────────────────────┐
│                             │⌒ 132
│      Point-wise Conv        │
│           1x1               │
│                             │
└─────────────────────────────┘
              │
              ▼
┌─────────────────────────────┐
│                             │⌒ 124
│        Group Conv           │
│           KxK               │
│                             │
└─────────────────────────────┘
```

## FIGURE 4B

Point-wise Conv
1x1 — 110

↓

Batched Group
Normalisation — 140

↓

Activation Function
(Hardswish) — 150

↓

Group Conv
KxK — 122

↓

Batched Group
Normalisation — 142

↓

Activation Function
(Hardswish) — 152

↓

Point-wise Conv
1x1 — 130

**FIGURE 5A**

```
┌─────────────────────────┐
│     Point-wise Conv     │ ╮── 110
│          1x1            │
└─────────────────────────┘
            │
            ▼
┌─────────────────────────┐
│     Batched Group       │ ╮── 140
│     Normalisation       │
└─────────────────────────┘
            │
            ▼
┌─────────────────────────┐
│   Activation Function   │ ╮── 150
│      (Hardswish)        │
└─────────────────────────┘
            │
            ▼
┌─────────────────────────┐
│     Point-wise Conv     │ ╮── 132
│          1x1            │
└─────────────────────────┘
            │
            ▼
┌─────────────────────────┐
│     Batched Group       │ ╮── 144
│     Normalisation       │
└─────────────────────────┘
            │
            ▼
┌─────────────────────────┐
│      Group Conv         │ ╮── 124
│          KxK            │
└─────────────────────────┘
            │
            ▼
┌─────────────────────────┐
│     Batched Group       │ ╮── 146
│     Normalisation       │
└─────────────────────────┘
            │
            ▼
┌─────────────────────────┐
│   Activation Function   │ ╮── 154
│      (Hardswish)        │
└─────────────────────────┘
```

**FIGURE 5B**

```
┌─────────────────────────────────┐
│                                 │  ⌒610
│         Obtain input data        │
│                                 │
└─────────────────────────────────┘
                 │
                 ▼
┌─────────────────────────────────┐
│                                 │  ⌒620
│        Obtain weight data        │
│                                 │
└─────────────────────────────────┘
                 │
                 ▼
┌─────────────────────────────────┐
│                                 │  ⌒630
│          Evaluate block          │
│                                 │
└─────────────────────────────────┘
```

**FIGURE 6**

**FIGURE 7A**

**FIGURE 7B**

Box 810: Obtain input data

Box 820: Evaluate layer

Box 830: Subtract group-wise final running means from training phase

Box 840: Divide group-wise by square root of final running variances from training phase

Conv 3x3

MB1 3x3

MB3 5x5

MB2 5x5

MB2 3x3

MB3 5x5

⎰ 10

MB3 5x5

MB3 5x5

MB2 3x3

⎰ 12

MB3 5x5

MB2 7x7

MB3 7x7

MB3 7x7

⎰ 14

MB3 7x7

MB2 7x7

MB3 7x7

MB2 7x7

⎰ 16

MB3 5x5

MB3 7x7

MB3 3x3

MB2 7x7

⎰ 18

Pooling FC

**FIGURE 8**

902

904

CPU

GPU

914

Display ～916

Speakers ～918

Camera ～922

920

906 Memory

912

NNA

908

910

**FIGURE 9**

1004

1002

1006

IC definition dataset → Layout processing → Circuit layout definition → Integrated circuit generation → Integrated circuit

**FIGURE 10**

Europäisches
Patentamt

European
Patent Office

Office européen
des brevets

## EUROPEAN SEARCH REPORT

**Application Number**

EP 25 15 0635

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/059336 A1 (GOOGLE LLC [US]) 13 April 2023 (2023-04-13) * claim 1; figures 4, 5 * * paragraph [0003] - paragraph [0004] * * paragraph [0026] * * paragraph [0030] - paragraph [0037] * * paragraph [0050] - paragraph [0052] * * paragraph [0067] * | 1-15 | INV. G06N3/0464 G06N3/048 G06N3/063 |
| A | WU YUXIN ET AL: "Group Normalization", 6 October 2018 (2018-10-06), 20181006, PAGE(S) 3 - 19, XP047635963, [retrieved on 2018-10-06] * abstract * * section "Group Norm"; page 6 * | 7-11 | |

**TECHNICAL FIELDS SEARCHED (IPC)**

G06N

The present search report has been drawn up for all claims

| Place of search | Date of completion of the search | Examiner |
|---|---|---|
| The Hague | 24 April 2025 | Tidriri, Khaoula |

EPO FORM 1503 03.82 (P04C01)

# EP 4 586 145 A1

## ANNEX TO THE EUROPEAN SEARCH REPORT
## ON EUROPEAN PATENT APPLICATION NO.

EP 25 15 0635

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2025

| Patent document cited in search report | Publication date | Patent family member(s) | Publication date |
|---|---|---|---|
| WO 2023059336 A1 | 13-04-2023 | CN 118265984 A | 28-06-2024 |
| | | EP 4384940 A1 | 19-06-2024 |
| | | JP 2024538714 A | 23-10-2024 |
| | | KR 20240050389 A | 18-04-2024 |
| | | TW 202316365 A | 16-04-2023 |
| | | US 2025124700 A1 | 17-04-2025 |
| | | WO 2023059336 A1 | 13-04-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2400306 A